# EUROPÄISCHE PATENTSCHRIFT

(11) **EP 3 048 081 B1**
(45) Veröffentlichungstag und Bekanntmachung des Hinweises auf die Patenterteilung: **02.08.2017**
(21) Anmeldenummer: 16000083.2
(22) Anmeldetag: 14.01.2016
(51) Int. Cl.: B67D 1/10, B01L 3/02, B67D 1/12, G01F 11/02, B67C 3/26, B67C 3/28

(54) **VENTILBLOCKANORDNUNG FÜR EIN FLASCHENAUFSATZGERÄT**
VALVE BLOCK ASSEMBLY FOR A BOTTLE ATTACHMENT
SYSTEME DE BLOC DE SOUPAPES POUR UN APPAREIL DE FIXATION DE BOUTEILLE

(30) Priorität: 23.01.2015 DE 202015000520 U
(43) Veröffentlichungstag der Anmeldung: 27.07.2016
(73) Patentinhaber: BRAND GMBH + CO KG, 97877 Wertheim (DE)
(72) Erfinder: Hochholzer, Günther, 97956 Werbach (DE); Kurz, Markus, 97877 Wertheim (DE)
(74) Vertreter: Von Rohr Patentanwälte Partnerschaft mbB

(56) Entgegenhaltungen:
- EP-A2- 0 542 241
- EP-A2- 2 799 141
- DE-A1- 3 208 436
- DE-A1- 19 536 258
- DE-U1-202007 017 095

## Beschreibung

Die Erfindung betrifft eine Ventilblockanordnung für ein Flaschenaufsatzgerät zur Handhabung von Flüssigkeiten mit den Merkmalen von Ansprüchen 1 oder 6 sowie ein Flaschenaufsatzgerät zur Handhabung von Flüssigkeiten mit den Merkmalen von Anspruch 15.

Bei Flaschenaufsatzgeräten zur Handhabung von Flüssigkeiten geht es um das genaue Abmessen und Fördern von Flüssigkeiten aus einer Vorratsflasche oder einem anderen Vorratsbehältnis, wobei das genaue Messen beim Aufnehmen eines Flüssigkeits-Teilvolumens aus der Vorratsflasche o.dgl. in das Gerät und/oder beim Abgeben eines Flüssigkeits-Teilvolumens aus dem Gerät nach außen in ein Behältnis erfolgt.

Flaschenaufsatzgeräte der in Rede stehenden Art sind insbesondere Flaschenaufsatzdispenser und Büretten. Derartige Flaschenaufsatzgeräte finden in der Chemie, der Biologie und der Pharmazie im Labor und in der Produktion umfangreich Anwendung.

Der Begriff "Flüssigkeit" bezeichnet im vorliegenden Zusammenhang vorzugsweise Flüssigkeiten wie sie in der Chemie, Biologie, Pharmazie etc. im Labor und in der Produktion Anwendung finden. Vorzugsweise handelt es sich hier um Flüssigkeiten mit einer relativen Viskosität bis etwa 300 (Viskosität bezogen auf die Viskosität von Wasser, gemessen bei Normalbedingungen). Umgangssprachlich handelt es sich also bei den Flüssigkeiten vorzugsweise um solche im Bereich von sehr dünnflüssig bis leicht dickflüssig.

Bei Flaschenaufsatzgeräten der in Rede stehenden Art werden hohe Anforderungen an die Volumengenauigkeit der Flüssigkeitsaufnahme und/oder der Flüssigkeitsabgabe sowie an die Bedienersicherheit gestellt. Üblicherweise werden die Flaschenaufsatzgeräte per Hand bedient oder auch per Aktuator angetrieben.

Ein typisches Beispiel eines Flaschenaufsatzgerätes in Form eines Flaschenaufsatzdispensers ist aus der EP 0 542 241 A2 bekannt. Von diesem Stand der Technik geht die vorliegende Erfindung aus.

Ein Flaschenaufsatzgerät in Form einer Bürette ist beispielhaft aus der EP 2 799 141 A2 bekannt. Ein Flaschenaufsatzgerät in Form einer Bürette hat viele konstruktive Einzelheiten mit einem Flaschenaufsatzgerät in Form eines Flaschenaufsatzdispensers gemein.

Hier und im Folgenden wird ein Flaschenaufsatzgerät stets in seiner Betriebsstellung beschrieben, also in seiner Stellung befestigt auf einer Vorratsflasche o.dgl. und im Wesentlichen lotrecht ausgerichtet. Entsprechend wird auch eine Ventilblockanordnung für ein solches Flaschenaufsatzgerät beschrieben, also ebenso in ihrer Betriebsstellung, also eingebaut in ein Flaschenaufsatzgerät, das sich in seiner Betriebsstellung befindet.

Ein wesentlicher Bestandteil eines Flaschenaufsatzgerätes der in Rede stehenden Art ist die Zylinder-Kolben-Anordnung, mit deren Hilfe die Flüssigkeit angesaugt und wieder ausgestoßen werden kann. Diese weist einen eine Längsrichtung definierenden Zylinder und einen in dem Zylinder abgedichtet längsverschieblich geführten Kolben auf. In einer Aufwärtsbewegung des Kolbens in dem Zylinder wird die Flüssigkeit durch Bildung von Unterdruck im Zylinder aufgesaugt. In einer Abwärtsbewegung wird die Flüssigkeit im Zylinder wieder aus dem Zylinder ausgestoßen. Die Strömung der Flüssigkeit einerseits beim Ansaugen, andererseits beim Ausstoßen wird durch Ventile der Ventilblockanordnung gelenkt. Die Zylinder-Kolben-Anordnung ist abdichtend mit der Ventilblockanordnung und den darin befindlichen Leitungen verbunden. Die Ventilblockanordnung selbst ist wiederum mit Hilfe der Befestigungsanordnung auf der Vorratsflasche o.dgl. angebracht.

Im Ventilblock der Ventilblockanordnung befindet sich ein Ansaugventil, das Flüssigkeit aus der Vorratsflasche mittels eines Ansaugrohrs anzusaugen erlaubt. Das Ansaugrohr, meist in Form eines aufgesteckten Schlauches, erstreckt sich tief nach unten in die Vorratsflasche. Etwa horizontal vom Ventilblock ab erstreckt sich eine Ausstoßleitung. In der Ausstoßleitung oder im Ventilblock am Beginn der Ausstoßleitung sitzt ein Ausstoßventil. Die Ausstoßleitung hat mitunter noch ein zusätzliches Umschaltventil, über das eine Rücklaufleitung zurück in die Vorratsflasche geöffnet oder geschlossen werden kann. Die Ausstoßleitung kann an einer Mündungsöffnung, an der die Flüssigkeit austritt, einen Verschluss aufweisen.

Da die Ausstoßleitung etwa horizontal vom Ventilblock abragt und häufig auch noch das zuvor erläuterte Umschaltventil trägt, ist dies die Seite, von der aus eine Bedienungsperson mit dem Flaschenaufsatzgerät arbeitet. Diese Seite kann man als "Vorderseite" des Flaschenaufsatzgerätes bezeichnen. Die gegenüberliegende Seite ist die "Rückseite" des Flaschenaufsatzgerätes. Bei einer elektronischen Ausgestaltung eines Flaschenaufsatzgerätes befindet sich eine Anzeige mit entsprechenden Bedienungselementen vorzugsweise an der Vorderseite des Flaschenaufsatzgerätes.

Bei der Befestigungsanordnung zum Befestigen des Außengehäuses und/oder der Ventilblockanordnung des Flaschenaufsatzgerätes auf einer Vorratsflasche o.dgl. handelt es sich häufig um eine Gewindeanordnung ähnlich einer Überwurfmutter oder um ein in dem Ventilblock selbst eingearbeitetes Innengewinde zum Verschrauben auf dem Außengewinde auf einem Flaschenhals der Vorratsflasche (siehe den eingangs angesprochenen Stand der Technik). Andere Befestigungsanordnungen wie Bajonettsysteme oder Kurzhub-Spannfutter sind aber ebenso grundsätzlich einsetzbar wie Systeme nach Art einer im Labor üblichen Kegel-Schliffverbindung.

Vorliegend geht es um die Ventilblockanordnung für ein Flaschenaufsatzgerät der in Rede stehenden Art und insbesondere um die Anordnung von Ansaugventil und/oder Ausstoßventil im Ventilblock der Ventilblockanordnung.

Im Stand der Technik, von dem die Erfindung ausgeht, und in vielen anderen Flaschenaufsatzgeräten (EP 0 542 241 A2, EP 2 799 141 A2, DE 32 08 436 A1) sind Ansaugventil und Ausstoßventil jeweils als eigene Einsätze, also als Ansaugventil-Einsatz bzw. Ausstoßventil-Einsatz ausgeführt. Der Ventilblock hat für jeden Ventil-Einsatz eine zugeordnete Ventil-Aufnahme, in der der Ventil-Einsatz abdichtend und auswechselbar eingesetzt ist.

Im Stand der Technik gibt es Konstruktionen des Ventilblockes der Ventilblockanordnung des Flaschenaufsatzgerätes, bei denen der Ansaugventil-Einsatz und der Ausstoßventil-Einsatz in gleicher Weise konstruiert und im Ventilblock eingesetzt sind. Es gibt aber auch Konstruktionen, bei denen für den Ansaugventil-Einsatz eine bestimmte konstruktive Lösung gewählt ist, für das Ausstoßventil oder den Ausstoßventil-Einsatz jedoch eine andere konstruktive Lösung realisiert ist.

Die Lehre der Erfindung bezieht sich auf ein Flaschenaufsatzgerät und eine Ventilblockanordnung für ein solches Flaschenaufsatzgerät insoweit, als zumindest eines der beiden Ventile betroffen ist, wobei die Lehre vorzugsweise für die Ausgestaltung von beiden Ventilen bestimmt und geeignet ist.

Die Anordnung des betroffenen Ventils in einem Ventil-Einsatz, der auswechselbar ist, hat offensichtliche handhabungstechnische und reparaturtechnische Vorteile. Bei dem Stand der Technik, von dem die Erfindung ausgeht, sind sowohl der Ventil-Einsatz als auch die Ventil-Aufnahme zylindrisch ausgestaltet und der Ventil-Einsatz ist in die Ventilaufnahme stramm bis zum Boden der Ventil-Aufnahme eingesteckt. Der Boden der Ventil-Aufnahme und die Stirnseite des zylindrischen Ventil-Einsatzes bilden einander zugeordnete Anschlagabschnitte. Die Anschlagabschnitte verlaufen quer zu einer Längsachse, die vom Ventil-Einsatz mit der zugehörigen Ventil-Aufnahme definiert wird.

Die aneinander zur Anlage kommenden Anschlagabschnitte von Ventil-Einsatz und Ventil-Aufnahme bilden gleichzeitig eine ringförmige, planare Dichtfläche für den Ventil-Einsatz. Sind die Werkstoffe von Ventilblock einerseits und Ventil-Einsatz andererseits relativ hart und/oder sind die Dichtflächen etwas uneben, so wird hier mitunter auch eine zusätzliche ringförmige Dichtung eingesetzt.

Die zylindrischen Mantelflächen von Ventil-Einsatz und Ventil-Aufnahme bilden einerseits die Befestigungsabschnitte, andererseits aber auch eine umlaufende Dichtfläche.

In anderen Ausführungsformen von Flaschenaufsatzgeräten der in Rede stehenden Art ist der im Übrigen zylindrische Ventil-Einsatz in der im Übrigen zylindrischen Ventil-Aufnahme locker eingesteckt und mittels einer Gewindeverbindung verschraubt.

Regelmäßig besteht bei einer Ventilblockanordnung eines Flaschenaufsatzgerätes der in Rede stehenden Art sowohl der Ventilblock selbst als auch der Ventil-Einsatz aus zum Autoklavieren geeigneten Kunststoffen. Im Einzelnen kann für die hier typischerweise einzusetzenden Kunststoffe, die häufig besondere Anforderungen hinsichtlich ihrer Beständigkeit gegenüber Chemikalien erfüllen müssen, zum einen auf den oben angegebenen Stand der Technik (EP 2 799 141 A2), zum anderen auf die einschlägige Fachliteratur und auf den Generalkatalog der Anmelderin (BRAND Gesamtkatalog 900 (Juni 2013), Seiten 334-341) verwiesen werden.

Wesentlich ist, dass bei einer Ventilblockanordnung eines Flaschenaufsatzgerätes der in Rede stehenden Art sowohl der Ventilblock als auch der Ventil-Einsatz aus Kunststoffen bestehen, die zum Autoklavieren geeignet sind. Beim Autoklavieren werden die Laborgeräte nach DIN EN 285 im Autoklaven mit Wasserdampf bei einer Temperatur von 121°C sterilisiert.

Beim Autoklavieren verformen sich die hier typischerweise einzusetzenden Kunststoffe, sofern sie unter Druckbelastung stehen, plastisch, also dauerhaft. Sie behalten lediglich eine restliche Elastizität. Will man vermeiden, dass nach dem Autoklavieren ein Flaschenaufsatzgerät hier oder dort mehr oder weniger undicht wird, muss man den Ventil-Einsatz vor dem Autoklavieren aus der Ventil-Aufnahme entfernen oder darin zumindest lockern.

Versäumt man beim Autoklavieren die zuvor geschilderte Maßnahme, so ist eine Ventilblockanordnung der in Rede stehenden Art spätestens nach mehrmaligem Autoklavieren unbrauchbar.

Der Lehre liegt das Problem zugrunde, eine Ventilblockanordnung für ein Flaschenaufsatzgerät zur Handhabung von Flüssigkeiten anzugeben, die eine verbesserte Abdichtung mit dem Ventil-Einsatz aufweist.

Die zuvor aufgezeigte Problemstellung ist bei einer Ventilblockanordnung für ein Flaschenaufsatzgerät zur Handhabung von Flüssigkeiten mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Im Besonderen kann ohne Manipulation des Ventil-Einsatzes bzw. der Ventil-Einsätze autoklaviert werden, ohne dass anschließend die Funktionstüchtigkeit der Ventilblockanordnung beeinträchtigt ist.

Nachfolgend wird die Lehre der Erfindung anhand einer Ventilblockanordnung mit einem Ventilblock im Zusammenhang mit einem Ventil-Einsatz in einer Ventil-Aufnahme, vorzugsweise dem Ansaugventil-Einsatz in der Ansaugventil-Aufnahme, erläutert. Die Erläuterung gilt aber darüber hinaus insbesondere auch für eine Ventilblockanordnung, bei der die erfindungsgemäße Konstruktion sowohl für den Ansaugventil-Einsatz als auch für den Ausstoßventil-Einsatz verwirklicht ist.

Zunächst ist erfindungsgemäß von Bedeutung, dass, insoweit noch wie im Stand der Technik, der Ventil-Einsatz einen Anschlagabschnitt und die Ventil-Aufnahme ebenfalls einen dazu passenden Anschlagabschnitt aufweist. Ebenso wie im Stand der Technik ist vorgesehen, dass der Ventil-Einsatz einen vom Anschlagabschnitt unterschiedenen Befestigungsabschnitt und die Ventil-Aufnahme einen dazu passenden Befestigungsabschnitt aufweist. Im Stand der Technik handelt es sich bei dem Befestigungsabschnitt am Ventil-Einsatz um die zylindrische Mantelfläche des Ventil-Einsatzes bei einem im Presssitz eingesteckten Ventil-Einsatz bzw. um das am Zylindermantel angeordnete Außengewinde, das mit dem Innengewinde an der Innenwandung der Ventil-Aufnahme in Eingriff steht.

Erfindungsgemäß kommt nun jedoch zu dem Anschlagabschnitt und dem Befestigungsabschnitt am Ventil-Einsatz und an der Ventil-Aufnahme ein von beiden unterschiedener Dichtungsabschnitt hinzu. Anders als im Stand der Technik, bei dem der stirnseitige Anschlagabschnitt die Dichtwirkung des Ventil-Einsatzes in der Ventil-Aufnahme erzielt, wird bei der erfindungsgemäßen Ventilblockanordnung die Dichtungswirkung im Wesentlichen mittels der separaten Dichtungsabschnitte erzielt.

Bei funktionsgerecht eingebautem Ventil-Einsatz stehen die Befestigungsabschnitte von Ventil-Einsatz und Ventil-Aufnahme dergestalt kraftübertragend miteinander in Eingriff, dass sowohl die Anschlagabschnitte als auch die Dichtungsabschnitte flächig aneinander anliegen.

Erfindungsgemäß wird eine minimale statische Überbestimmung durch die Anschlagabschnitte in Verbindung mit den Dichtungsabschnitten genutzt. Die Dichtungsabschnitte werden, wenn sie aneinander anliegen so lange und damit nur minimal deformiert bis auch die Anschlagabschnitte aneinander anliegen.

Die Anschlagabschnitte verlaufen regelmäßig im Wesentlichen rechtwinklig zur von dem Ventil-Einsatz und der zugehörigen Ventil-Aufnahme definierten Längsachse. Sie können aber auch geringfügig von dem rechten Winkel gegenüber der Längsachse abweichend verlaufen. Insoweit sollte eine Abweichung von 10° gegenüber dem rechten Winkel vorzugsweise nicht überschritten werden.

Erfindungsgemäß befindet sich an den Anschlagabschnitten kein zusätzliches Dichtungselement, die Anschlagabschnitte liegen flächig aneinander an. Das Auftreffen der Anschlagabschnitte aufeinander gibt den Fixpunkt beim Einsetzen des Ventil-Einsatzes in die Ventil-Aufnahme vor. Die Abmessungen des Ventil-Einsatzes und der Ventil-Aufnahme sind so getroffen, dass in diesem Zustand auch die Dichtungsabschnitte flächig aneinander anliegen. Dadurch ergibt sich eine große Dichtfläche in Richtung der Längsachse.

Die erfindungsgemäße Ventilblockanordnung gewährleistet eine sichere Abdichtungsfunktion bei einer geringen, von den Befestigungsabschnitten aufzubringenden Andruckkraft, wobei auf eine zusätzliche Dichtung verzichtet werden kann. Insbesondere ist es bei der erfindungsgemäßen Konstruktion nicht erforderlich, den Ventil-Einsatz vor dem Autoklavieren auszubauen oder zu lösen. Die Aufteilung der Funktionen auf unterschiedliche Abschnitte führt zu den notwendigen Freiheitsgraden, um die Verformung der Kunststoffe beim Autoklavieren berücksichtigen zu können.

Die bevorzugte Konstruktion bei der erfindungsgemäßen Ventilblockanordnung sieht so aus, dass der Anschlagabschnitt am Ventil-Einsatz am vorderen, in der Ventil-Aufnahme befindlichen Ende des Ventil-Einsatzes angeordnet ist, dass in Richtung des gegenüberliegenden, hinteren Endes des Ventil-Einsatzes anschließend an den Anschlagabschnitt der Dichtungsabschnitt angeordnet ist und dass in Richtung des hinteren Endes des Ventil-Einsatzes anschließend an den Dichtungsabschnitt der Befestigungsabschnitt angeordnet ist.

Als Alternative könnte man den Anschlagabschnitt am Ventil-Einsatz auch zwischen Dichtungsabschnitt und Befestigungsabschnitt, oder sogar ganz nach vorn, noch vor den Befestigungsabschnitt verlegen. Die zuvor genannte Variante hat allerdings den Vorteil, dass auch schon die flächig aneinander anliegenden Anschlagabschnitte eine Dichtungsfunktion erfüllen.

Die Angabe, dass ein Abschnitt an den anderen Abschnitt "anschließend" angeordnet ist, kann bevorzugt ein unmittelbares Anschließen bedeuten. Auf dieses Verständnis ist diese Angabe aber nicht beschränkt. Grundsätzlich ist es auch möglich, dass zwischen den Abschnitten gewisse Abstände vorhanden sind, gewissermaßen also "Zwischenabschnitte", die für die Funktion der erfindungsgemäßen Ventilblockanordnung im Rahmen der Erfindung unwesentlich sind.

Zuvor ist bereits zur Orientierung der Anschlagabschnitte eine Aussage getroffen worden. Für die Anordnung der Dichtungsabschnitte gibt es ebenfalls eine bevorzugte Anordnung, die wieder die von dem Ventil-Einsatz und der zugehörigen Ventil-Aufnahme definierte Längsachse als Bezug hat. Insoweit empfiehlt es sich, dass die Dichtungsabschnitte in einem spitzen Winkel zur Längsachse, und zwar vorzugsweise in einem Winkel zwischen 1° und 20°, besonders bevorzugt in einem Winkel zwischen 2° und 10°, ausgerichtet sind. Die Dichtungsabschnitte verlaufen also nicht parallel zur Längsachse, so dass die für die Dichtwirkung relevante Anpresskraft nur radial gerichtet sein kann, sondern sie laufen leicht geneigt zur Längsachse. Dadurch kann an den Dichtungsabschnitten eine ausreichende radiale Kraftwirkung durch eine in Richtung der Längsachse einwirkende Kraftkomponente realisiert werden. Auf diese Weise gewinnen die Dichtungsabschnitte ihre optimale Dichtwirkung, während die Anschlagabschnitte die radiale Verpressung des Kunststoffmaterials in den Dichtungsabschnitten durch ihre Anschlagwirkung begrenzen.

Geht man von einer bevorzugten Variante mit einem bzgl. der Längsachse rotationssymmetrischen Ventil-Einsatz aus, so sind bei der zuvor erläuterten Konzeption die Dichtungsabschnitte kegelstumpfförmig ausgebildet.

Grundsätzlich könnte man den Ventil-Einsatz und die zugehörige Ventil-Aufnahme aber auch nicht rotationssymmetrisch ausführen, dann käme man zu prismatischen Gestaltungen der Dichtungsabschnitte.

Nach einer weiter bevorzugten konstruktiven Variante kann man vorsehen, dass der Winkel des Dichtungsabschnittes an der Ventil-Aufnahme zur Längsachse um bis zu 2,5° größer ist als der Winkel des Dichtungsabschnittes am Ventil-Einsatz zur Längsachse. Auf diese Weise trifft der Dichtungsabschnitt am Ventil-Einsatz zunächst nur mit Linienberührung auf den Dichtungsabschnitt an der Ventil-Aufnahme. Wird durch die Befestigungsabschnitte in Richtung der Längsachse Kraft ausgeübt, so geht die Linienberührung durch Deformation der Dichtungsabschnitte in eine Flächenberührung über. Im Laufe der Zeit, besonders beschleunigt durch hohe Temperaturen wie beim Autoklavieren erfolgt sukzessive eine Vervollständigung der Flächenberührung und damit eine sichere Abdichtung über die Dichtungsabschnitte.

Der Begriff "flächig aneinander anliegend" bedeutet also nicht, dass die Dichtungsabschnitte schon von vornherein vollflächig aneinander anliegen. Die Ausdehnung der aneinander anliegenden Flächen der Dichtungsabschnitte kann sich vielmehr unter Einwirkung von Druck und Temperatur vergrößern bis es schließlich zu einer vollflächigen Anlage der Dichtungsabschnitte aneinander kommt.

In einer weiteren, für sich selbstständigen Lehre der Erfindung, der eigenständige Bedeutung zukommt, ist die zuvor aufgezeigte Problemstellung dadurch gelöst, dass der Ventil-Einsatz einen Befestigungsabschnitt und einen davon unterschiedenen Dichtungsabschnitt aufweist, dass die zugehörige Ventil-Aufnahme zu den Abschnitten des Ventil-Einsatzes passende Befestigungs- und Dichtungsabschnitte aufweist, dass bei funktionsgerecht eingebautem Ventil-Einsatz die Befestigungsabschnitte dergestalt kraftübertragend miteinander in Eingriff stehen, dass die Dichtungsabschnitte flächig aneinander anliegen, dass der Ventil-Einsatz und die zugehörige Ventil-Aufnahme eine Längsachse definieren und dass die Dichtungsabschnitte in einem spitzen Winkel zur Längsachse, vorzugsweise einem Winkel zwischen 1° und 20°, insbesondere zwischen 2° und 10°, zur Längsachse, ausgerichtet sind. Hier wird auf Anschlagabschnitte verzichtet. Jedenfalls werden entsprechende Ausgestaltungen an der Ventilblockanordnung nicht für Anschlagzwecke genutzt. Die miteinander zusammenwirkenden, in einem spitzen Winkel zur Längsachse ausgerichteten Dichtungsabschnitte selbst bewirken auch die Begrenzung des Bewegungsweges des Ventil-Einsatzes in die Ventil-Aufnahme hinein, zweckmäßigerweise mittels einer entsprechend begrenzten Kraftaufbringung über die Befestigungsabschnitte.

Bevorzugt gilt auch für diese Konstruktion, dass die Dichtungsabschnitte kegelstumpfförmig ausgebildet sind, wenn man von einem rotationssymmetrischen Ventil-Einsatz ausgeht, oder prismatisch gestaltet sind, wenn man von einem nicht rotationssymmetrisch ausgeführten Ventil-Einsatz ausgeht.

Weiter bevorzugte Ausgestaltungen und Weiterbildungen betreffen die konstruktive Gestaltung der Wandungen von Ventilblock und Ventil-Einsatz im Bereich der Dichtungsabschnitte.

Was die Herstellung des Ventilblockes und der Ventil-Einsätze betrifft, so empfiehlt sich die Herstellung im Kunststoff-Spritzgussverfahren. Beispielhaft können für den Ventilblock und für den Ventil-Einsatz Fluorpolymere eingesetzt werden.

Von besonderem Interesse ist die Konstruktion der erfindungsgemäßen Ventilblockanordnung dann, wenn man die Kunststoffe der miteinander zusammenwirkenden Bauteile auswählt und aufeinander abstimmt, um eine gezielte Deformation der miteinander zusammenwirkenden Bauteile an den aneinander zur Anlage kommenden Flächen zu gewährleisten. Insoweit hat es sich als zweckmäßig erwiesen, dass sowohl der Kunststoff des Ventilblockes als auch der Kunststoff des Ventil-Einsatzes eine Zugfestigkeit von mehr als 12 MPa bei 120°C (EN ISO 12086) aufweist. Besonderes bevorzugt ist es dabei, dass der Kunststoff des Ventilblocks eine um 40% bis 100% größere Zugfestigkeit (EN ISO 12086, gemessen bei 23°C) als der Kunststoff des Ventil-Einsatzes aufweist. Beispiele hierzu werden im speziellen Teil der Beschreibung (Figurenbeschreibung) dargestellt.

Bislang ist bezogen auf die Lehre der Erfindung noch nichts weiter zur Ausgestaltung der Befestigungsabschnitte erläutert worden. Es empfiehlt sich, die Befestigungsabschnitte so auszugestalten, dass sich eine definierte Kraftwirkung erreichen lässt. Besonders bevorzugt ist dabei die Ausgestaltung der Befestigungsabschnitte als ineinander greifende Schraubgewindeabschnitte. Man kann auch an eine Bajonettverbindung, eine Kurzhub-Spannverbindung oder eine Stopfenverbindung denken. Die Ausgestaltung der Befestigungsabschnitte als Schraubverbindung erlaubt aber ein besonders feinfühliges Einsetzen des Ventil-Einsatzes in die Ventil-Aufnahme bis zum beim Einschrauben deutlich merkbaren Anschlag der Anschlagabschnitte aneinander bzw. bis eine bestimmte Grenzkraft erreicht oder überschritten wird. Letzteres kann man mit einem Drehmomentwerkzeug realisieren, mit dem der Ventil-Einsatz in die Ventil-Aufnahme eingeschraubt bzw. eingedreht wird.

Erfindungsgemäß kann man am Ventil-Einsatz des Ansaugventils einen Aufsteckstutzen für einen Schlauch oder eine sonstige Ansaugleitung, die in die Vorratsflasche hinein reicht, anordnen und vorzugsweise dort einstückig ausformen.

Gegenstand der Erfindung ist nicht nur die zuvor beschriebene Ventilblockanordnung für ein Flaschenaufsatzgerät zur Handhabung von Flüssigkeiten, sondern auch und insbesondere ein Flaschenaufsatzgerät zur Handhabung von Flüssigkeiten, dessen Ventilblockanordnung in der zuvor diskutierten Weise erfindungsgemäß ausgestaltet ist.

Im Folgenden wird die Erfindung nun anhand einer lediglich ein bevorzugtes Ausführungsbeispiel darstellenden Zeichnung näher erläutert. In der Zeichnung zeigt
- Fig. 1: in perspektivischer Ansicht ein Flaschenaufsatzgerät zur Handhabung von Flüssigkeiten in Form eines Flaschenaufsatzdispensers,
- Fig.2: in perspektivischer Ansicht das Flaschenaufsatzgerät aus Fig. 1 jedoch ohne Umschaltventil in der Ausstoßleitung,
- Fig. 3: das Flaschenaufsatzgerät aus Fig. 1 im Schnitt im Bereich der Ventilblockanordnung,
- Fig. 4a: ausschnittweise die Ventilblockanordnung des Flaschenaufsatzgerätes aus Fig. 3 im Bereich des Ansaugventil-Einsatzes,
- Fig. 4b: ausschnittweise, in einer Fig. 4a entsprechenden Darstellung, eine Ventilblockanordnung eines weiteren Ausführungsbeispiels und
- Fig. 4c: ausschnittweise, in einer Fig. 4a entsprechenden Darstellung, eine Ventilblockanordnung eines weiteren Ausführungsbeispiels.

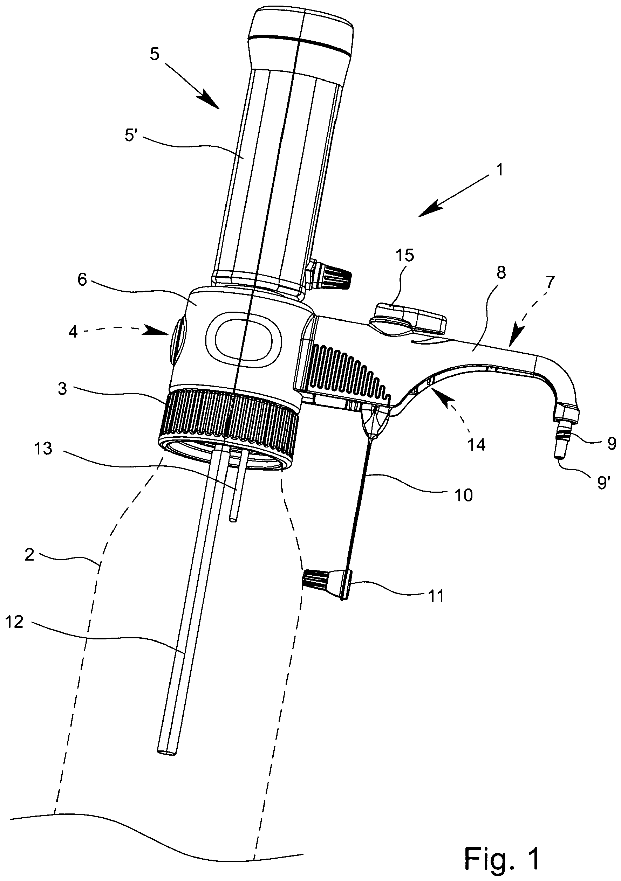

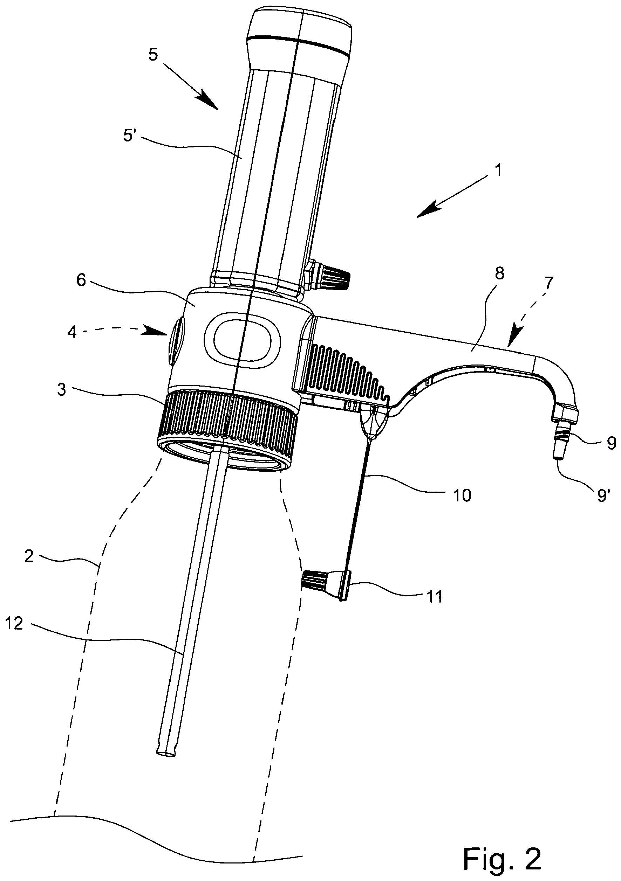

Fig. 1 oder Fig. 2 zeigen je ein bevorzugtes Ausführungsbeispiel eines erfindungsgemäßen Flaschenaufsatzgerätes 1 zur Handhabung von Flüssigkeiten, hier in Form eines Flaschenaufsatzdispensers.

Generell darf für Flaschenaufsatzgeräte zur Handhabung von Flüssigkeiten, sog. "Liquid Handling"-Geräte auf den Generalkatalog der Anmelderin (BRAND Gesamtkatalog 900 (Juni 2013)) verwiesen werden. Dort werden Flaschenaufsatzgeräte der in Rede stehenden Art in Konstruktion und Anwendung umfassend erläutert. Im Übrigen darf für Flaschenaufsatzgeräte der in Rede stehenden Art auch auf die einleitend angeführten Quellen aus dem Stand der Technik verwiesen werden.

Für das Flaschenaufsatzgerät, das hier im bevorzugten Ausführungsbeispiel beschrieben wird, gelten die Definitionen von oben und unten sowie von vorne und hinten, die einleitend in der Beschreibung angegeben worden sind. Das Flaschenaufsatzgerät 1 wird stets in der in Fig. 1 dargestellten Position auf einer Vorratsflasche 2 als bevorzugtem Bespiel eines Vorratsbehälters erläutert, auch wenn es in den einzelnen Darstellungen nicht in dieser Position dargestellt sein sollte.

Das in Fig. 1 oder Fig. 2 dargestellte Flaschenaufsatzgerät 1 ist im Betrieb auf einer Vorratsflasche 2 angebracht. Genauer gesagt ist das Flaschenaufsatzgerät 1 mit Hilfe einer Befestigungsanordnung 3 auf dem Flaschenhals der Vorratsflasche 2 angebracht. Hat der Flaschenhals der Vorratsflasche 2 ein Außengewinde, so kann es sich bei der Befestigungsanordnung 3 beispielsweise um eine Art Überwurfkappe mit Innengewinde handeln, die am Flaschenaufsatzgerät 1 unten angebracht ist. Die Befestigungsanordnung 3 kann aber auch in Form einer stopfenartigen Steckanordnung ausgebildet sein oder andere Formen annehmen. Wesentlich ist nur, dass mittels der Befestigungsanordnung 3 das Flaschenaufsatzgerät 1 auf der Vorratsflasche 2 oder einem anderen passenden Vorratsbehältnis sicher befestigt werden kann.

In Fig. 1 oder Fig. 2 sieht man oben am Flaschenaufsatzgerät 1 dessen Zylinder-Kolben-Anordnung 5. Vorliegend hat das Flaschenaufsatzgerät 1 eine Zylinder-Kolben-Anordnung 5 mit einer äußeren, den Zylinder überfassenden Zylinderhülse 5'. An dieser befindet sich ein mechanischer, verstellbarer Hubweganschlag.

Eine Ventilblockanordnung 4 trägt die Zylinder-Kolben-Anordnung 5, befindet sich selbst aber hier, entsprechend bevorzugter Lehre, in einem Außengehäuse 6 des Flaschenaufsatzgerätes 1, ist also in Fig. 1 nicht unmittelbar zu erkennen. Die Befestigungsanordnung 3 selbst befindet sich an der Ventilblockanordnung 4 oder, wie hier, am Außengehäuse 6.

Vom Außengehäuse 6 des Flaschenaufsatzgerätes 1 ragt nach vorne eine Ausstoßleitung 7 ab, die im dargestellten Ausführungsbeispiel in einem auslegerartigen, winkelförmig gestalteten Halter 8 angeordnet und geführt ist. Die Ausstoßleitung 7 endet in einer Spitze 9. Am Halter 8 befestigt ist eine Haltelasche 10, die eine Verschlusskappe 11 hält, mit der die Mündungsöffnung 9' an der Spitze 9 verschlossen und gegen Abtropfen von Flüssigkeit geschützt werden kann.

Von der in dem Außengehäuse 6 versteckten Ventilblockanordnung 4 erstreckt sich nach unten in die Vorratsflasche 2 hinein eine Ansaugleitung 12 für Flüssigkeit. Neben der Ansaugleitung 12 sieht man in Fig. 1 eine Rücklaufleitung 13, durch die Flüssigkeit bei Bedarf statt durch die Ausstoßleitung 7 zurück in die Vorratsflasche 2 geleitet werden kann.

Ein für einen Rücklauf von Flüssigkeit in die Vorratsflasche 2 geeignetes Umschaltventil 14, das mittels eines Knebels 15 an der Oberseite des Halters 8 betätigbar ist, befindet sich hier außerhalb der Ventilblockanordnung 4 und des Außengehäuses 6 und im dargestellten und bevorzugten in Fig. 1 dargestellten Ausführungsbeispiel innerhalb des Halters 8 für die Ausstoßleitung 7.

Fig. 2 zeigt ein Flaschenaufsatzgerät 1 in Form eines Flaschenaufsatzdispensers ohne ein Umschaltventil 14, also ohne die Funktion der "Rückdosierung", die im Stand der Technik ausführlich erläutert wird (EP 0 542 241 A2). Dann entfällt natürlich auch die Rücklaufleitung 13.

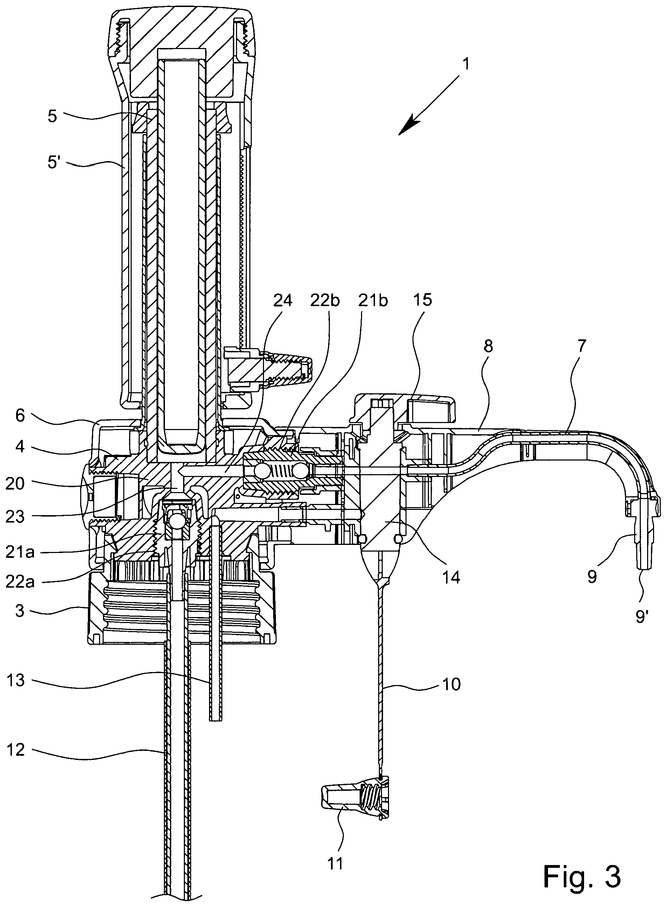

Fig. 3 zeigt nun im Schnitt das Flaschenaufsatzgerät 1 aus Fig. 1. Das besondere Interesse für die Zwecke der vorliegenden Erfindung gilt der Ventilblockanordnung 4, die hier im Außengehäuse 6 zu erkennen ist. Die Ventilblockanordnung 4 besteht regelmäßig aus Kunststoff, insbesondere aus chemikalienbeständigem Kunststoff. Die Ventilblockanordnung 4 hat eine Vielzahl von Kanälen und Einbauten, wozu im Einzelnen auf den eingangs erläuterten Stand der Technik verwiesen werden darf.

Vorliegend zeigt die Ventilblockanordnung 4 einen Ventilblock 20, einen Ansaugventil-Einsatz 21 a und einen Ausstoßventil-Einsatz 21 b. Die hier gewählte Bezugszeichen-Systematik hat damit zu tun, dass nachfolgend bei der Erläuterung des Ausführungsbeispiels nur ein Ventil-Einsatz 21 exemplarisch behandelt wird. Bei diesem Ventil-Einsatz 21 handelt es sich zwar bevorzugt um den Ansaugventil-Einsatz, es kann sich aber auch um den Ausstoßventil-Einsatz handeln. Bevorzugt sind sowohl der Ansaugventil-Einsatz 21 a als auch der Ausstoßventil-Einsatz 21 b in der nachfolgend im Detail beschriebenen Weise konstruiert und angeordnet.

Der Ventilblock 20 weist eine dem Ventil-Einsatz 21 zugeordnete Ventil-Aufnahme 22 auf. Es gibt also bei der Darstellung in Fig. 3 eine Ansaugventil-Aufnahme 22a und eine Ausstoßventil-Aufnahme 22b, weil das insoweit dargestellte und bevorzugte Ausführungsbeispiel entsprechende Einsätze für beide Ventile zeigt (ohne dass das einschränkend für den Schutzumfang zu verstehen ist).

In der nach unten gerichteten Ansaugventil-Aufnahme 22a im Ventilblock 20 befindet sich der Ansaugventil-Einsatz 21 a, an den sich nach unten in die Vorratsflasche 2 hinein die Ansaugleitung 12 anschließt. Nach oben hin schließt sich an die Ansaugventil-Aufnahme 22a im Ventilblock 20 ein Ansaugkanal 23 an, der zum Zylinder der Zylinder-Kolben-Anordnung 5 führt. Von dem Ansaugkanal 23 zweigt ein in Fig. 3 nach rechts gerichteter Ausstoßkanal 24 im Ventilblock 20 ab, der in die Ausstoßventil-Aufnahme 22b führt, in der sich der Ausstoßventil-Einsatz 21 b befindet.

Im dargestellten und bevorzugten Ausführungsbeispiel befindet sich das Umschaltventil 14 in Strömungsrichtung der Flüssigkeit hinter dem Ausstoßventil-Einsatz 21 b. Fig. 3 lässt das gut erkennen. Es gibt aber auch konstruktive Lösungen, bei denen die Reihenfolge umgekehrt ist, also das Umschaltventil sich in Strömungsrichtung vor dem Ausstoßventil befindet.

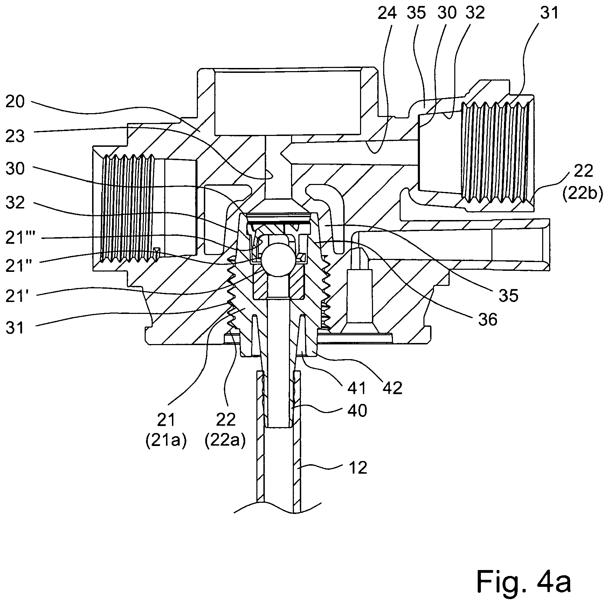

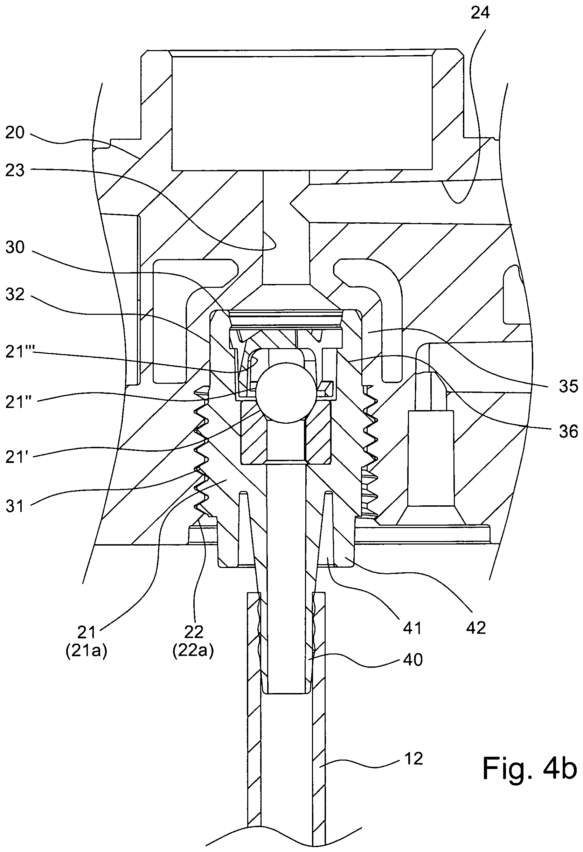

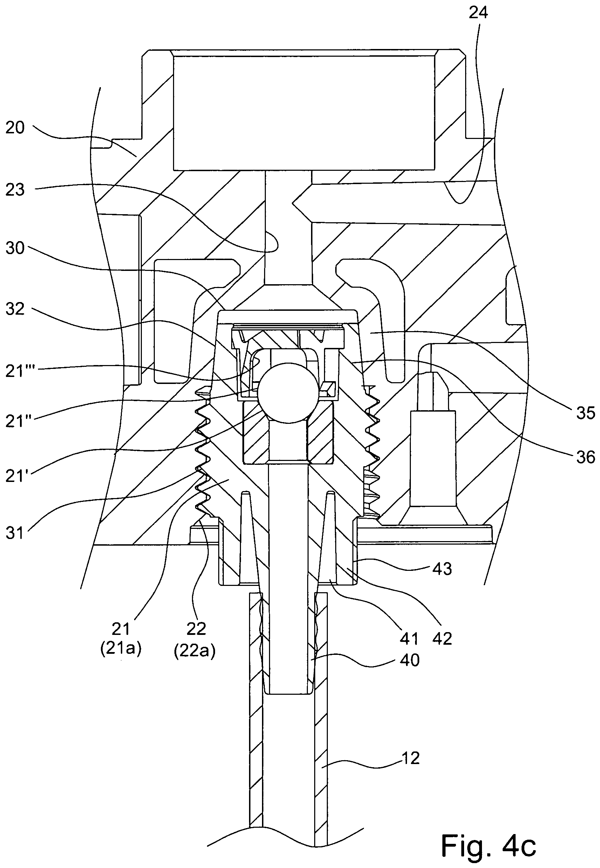

Für Details der erfindungsgemäßen Ventilblockanordnung 4 wird nun auf die vergrößerte, ausschnittweise Darstellung in Fig. 4a Bezug genommen, die anhand des Beispiels des Ansaugventils, das aber nicht beschränkend zu verstehen ist, die Konstruktion der erfindungsgemäßen Ventilblockanordnung näher darstellen lässt. Fig. 4b und Fig. 4c zeigen modifizierte Ausführungsformen der Ventilblockanordnung 4, die nachfolgend noch genauer erläutert werden.

Fig. 4a zeigt, dass der Ventil-Einsatz 21 in der Ventil-Aufnahme 22 auswechselbar und abdichtend eingesetzt ist. Im Ventil-Einsatz 21 sieht man einen Ventilsitz 21' für einen hier als Ventilkugel ausgeführten Ventilkörper 21". Im hier dargestellten Ausführungsbeispiel und in der Darstellung des Ventil-Einsatzes 21 als Ansaugventil-Einsatz liegt die Ventilkugel, die den Ventilkörper 21" bildet, unter eigener Schwerkraft auf dem Ventilsitz 21' auf und verschließt dadurch die Ansaugleitung 12. Es ist hier also keine Ventilfeder vorgesehen, die den Ventilkörper 21" auf den Ventilsitz 21' drückt, wie das im Fall eines Ausstoßventil-Einsatzes zweckmäßigerweise vorgesehen wäre.

Im Ventil-Einsatz 21 ist ein Ventilkäfig 21''' angeordnet, der die Beweglichkeit des Ventilkörpers 21" über eine Wegstrecke nach oben begrenzt. Der Ventilkäfig 21''' ist vorzugsweise in den Ventil-Einsatz 21 eingesetzt und mittels einer Schnapphakenstruktur befestigt. Der Ventilkäfig 21''' weist zu dem Zylinder hin eine Anschlagstruktur und seitlich mehrere Beinchen für den Ventilkörper 21" auf. Die Beinchen dienen als seitlich Führung für den Ventilkörper 21". Der Raum zwischen den Beinchen und zwischen Ventilkörper 21" und Ventil-Einsatz 21 dient als Kanal, um auf diese Weise von der Flüssigkeit - im vorliegenden Fall während des Saughubes des Kolbens im Zylinder der Zylinder-Kolben-Anordnung 5 - durch- bzw. umströmt werden zu können.

Sowohl der Ventilblock 20 als auch der Ventil-Einsatz 21 besteht jeweils aus einem Kunststoff, der zum Autoklavieren bei 121 °C geeignet ist. Zu den Angaben über verschiedene Kunststoffe mit ihren Kürzeln wird auf die einschlägige Fachliteratur und wie oben bereits auch auf den Generalkatalog der Anmelderin verwiesen.

Der Ventil-Einsatz 21 hat einen Anschlagabschnitt 30, einen davon unterschiedenen Befestigungsabschnitt 31 und einen von beiden unterschiedenen Dichtungsabschnitt 32. Die Ventil-Aufnahme 22 hat einen dazu passenden Anschlagabschnitt 30, Befestigungsabschnitt 31 und Dichtungsabschnitt 32.

Wie man aus Fig. 4a erkennen kann, ist erfindungsgemäß die Konstruktion so getroffen, dass bei funktionsgerecht eingebautem Ventil-Einsatz 21 die Befestigungsabschnitte 31 dergestalt kraftübertragend miteinander in Eingriff stehen, dass sowohl die Anschlagabschnitte 30 als auch die Dichtungsabschnitte 32 flächig aneinander anliegen. Dadurch ergibt sich im Bereich der Dichtungsabschnitte 32 eine große breite Dichtfläche, die noch von der Dichtfläche, die von den aneinander anliegenden Anschlagabschnitten 30 hinzugefügt wird, ergänzt wird.

Im dargestellten und bevorzugten Ausführungsbeispiel definieren der Ventil-Einsatz 21 und die zugehörige Ventil-Aufnahme 22 eine Längsachse und die Anschlagabschnitte 30 verlaufen rechtwinklig zu dieser Längsachse. Damit haben die Anschlagabschnitte 30 die optimale Anschlagwirkung. Eine in Richtung der Längsachse erfolgende Einsetzbewegung des Ventil-Einsatzes 21 findet beim Anliegen der Anschlagabschnitte 30 aneinander ein abruptes Ende.

Im allgemeinen Teil der Beschreibung ist bereits darauf hingewiesen worden, dass die Anschlagabschnitte 30 auch leicht geneigt zur Längsachse ausgerichtet sein können, maximaler Neigungswinkel insoweit bevorzugt bei 10° gegenüber der Senkrechten zur Längsachse.

Anders als im Stand der Technik ist die Dichtungsfunktion des Ventil-Einsatzes 21 in der Ventil-Aufnahme 22 jedenfalls überwiegend an die Dichtungsabschnitte 32 verlegt worden. Auch die Dichtungsabschnitte 32 sollen bei funktionsgerecht eingebautem Ventil-Einsatz 21 flächig aneinander anliegen.

Das dargestellte und bevorzugte Ausführungsbeispiel zeigt für die Konstruktion des Ventil-Einsatzes 21, dass der Anschlagabschnitt am Ventil-Einsatz 21 am vorderen, in der Ventil-Aufnahme 22 befindlichen Ende des Ventil-Einsatzes 21 angeordnet ist, dass in Richtung des gegenüberliegenden, hinteren Endes des Ventil-Einsatzes 21 anschließend an den Anschlagabschnitt 30 der Dichtungsabschnitt 32 angeordnet ist und dass in Richtung des hinteren Endes des Ventil-Einsatzes 21 anschließend an den Dichtungsabschnitt 32 der Befestigungsabschnitt 31 angeordnet ist.

Im allgemeinen Teil der Beschreibung ist bereits darauf hingewiesen worden, dass man grundsätzlich auch eine Variante wählen kann, bei der die Anschlagabschnitte 30 zwischen den Befestigungsabschnitten 31 und Dichtungsabschnitten 32 oder sogar ganz am vorderen Ende noch vor den Befestigungsabschnitten 31 angeordnet sein können. In der in Fig. 4a dargestellten Konstruktion ergibt sich allerdings die auch im Stand der Technik bereits vorhandene Dichtungswirkung der Anschlagabschnitte 30, durch die die Dichtungswirkung der primär für die Abdichtung verantwortlichen Dichtungsabschnitte 32 unterstützt wird.

Das dargestellte und bevorzugte Ausführungsbeispiel zeigt ferner eine besonders zweckmäßige Konstruktion in Form der Ausrichtung der Dichtungsabschnitte 32. Die Dichtwirkung ist dadurch optimiert, dass die Dichtungsabschnitte 32 in einem spitzen Winkel zur Längsachse, vorzugsweise einem Winkel zwischen 1° und 20°, insbesondere zwischen 2° und 10°, zur Längsachse, ausgerichtet sind. Während die Anschlagabschnitte 30 im dargestellten und bevorzugten Ausführungsbeispiel genau rechtwinkelig zur Längsachse des Ventil-Einsatzes 21 ausgerichtet sind, sind die Dichtungsabschnitte 32 nicht genau parallel zur Längsachse ausgerichtet, sondern in einem spitzen Winkel.

Geht man von einer rotationssymmetrischen Ausführung des Ventil-Einsatzes 21 und der Ventil-Aufnahme 22 aus, was einer bevorzugten Konstruktion entspricht, so bedeutet die zuvor beschriebene Konstruktion, dass die Dichtungsabschnitte 32 geometrisch ideal kegelstumpfförmig ausgebildet sind. Eine davon abweichender Dichtungsabschnitt, der beispielsweise eine im angegebenen Winkel geneigte und sphärische Fläche aufweist, dichtet bei ähnlicher Anpresskraft. Die Kombination von unterschiedlichen Oberflächen der Dichtungsabschnitte, beispielsweise mit einerseits ebener Fläche und anderseits mit erhabenen Ringstrukturen, erhöht die Dichtwirkung.

Die aneinander anliegenden Bauteile verformen sich an den Dichtungsabschnitten 32 beim Autoklavieren elastisch und plastisch (typischerweise um weniger als 1 mm, z.B. um etwa 0,4 mm). Es ergibt sich eine statische Überbestimmung, die erfindungsgemäß gezielt genutzt wird, um eine optimale Abdichtung des Ventil-Einsatzes 21 in der Ventil-Aufnahme 22 auch nach mehreren Durchläufen beim Autoklavieren zu gewährleisten.

Das dargestellte und bevorzugte Ausführungsbeispiel lässt in Fig. 4a aufgrund des Maßstabes nicht erkennen, dass nach bevorzugter Lehre der Erfindung der Winkel des Dichtungsabschnittes 32 an der Ventil-Aufnahme 22 zur Längsachse um bis zu 2,5° größer sein kann als der Winkel des Dichtungsabschnittes 32 am Ventil-Einsatz 21 zur Längsachse. Auf diese Weise trifft der Dichtungsabschnitt 32 am Ventil-Einsatz 21 zunächst nur mit Linienberührung auf den Dichtungsabschnitt 32 an der Ventil-Aufnahme 22. Wird durch die Befestigungsabschnitte 31 in Richtung der Längsachse Kraft ausgeübt, so geht die Linienberührung durch Deformation der Dichtungsabschnitte 32 in eine Flächenberührung über. Im Laufe der Zeit, besonders beschleunigt durch hohe Temperaturen wie beim Autoklavieren erfolgt sukzessive eine Vervollständigung der Flächenberührung und damit eine sichere Abdichtung über die Dichtungsabschnitte 32.

Fig. 4b zeigt eine Variante der Ventilblockanordnung 4 aus Fig. 4a, bei der vorgesehen ist, dass die Dichtungsabschnitte 32 im Wesentlichen parallel zur Längsachse auf der Außenfläche des Ventil-Einsatzes 21 angeordnet sind. Entsprechend sind auch die Dichtungsabschnitte 32 an der Ventil-Aufnahme 22 im Wesentlichen zylindrisch ausgeführt. Die Bemaßung des Ventil-Einsatzes 21 im Bereich der Dichtungsabschnitte 32 ist so gewählt, dass sich bei Einsatz in die Ventil-Aufnahme 22 vorzugsweise eine Presspassung ergibt. Durch die Wirkung der Befestigungsabschnitte 31, die wie beschrieben vorzugsweise als ineinander greifende Schraubgewindeabschnitte ausgeführt sind, wird der Ventil-Einsatz 21 in die Ventil-Aufnahme 22 eingeschoben und dadurch geraten die Dichtungsabschnitte 32 in flächige Anlage aneinander. Die Anschlagabschnitte 30 begrenzen diese Einschubbewegung.

Das in Fig. 4c dargestellte nochmals modifizierte Ausführungsbeispiel einer Ventilblockanordnung 4 gemäß der Erfindung hat nur Befestigungsabschnitte 31 und davon unterschiedene Dichtungsabschnitte 32 am Ventil-Einsatz 21 und an der Ventil-Aufnahme 22. Wie Fig. 4c zeigt, liegen die Dichtungsabschnitte 32 hier in einem spitzen Winkel zur Längsachse des Ventil-Einsatzes 21, vorzugsweise in einem Winkel zwischen 1° und 20°, insbesondere zwischen 2° und 10°, zur Längsachse. Das dargestellte Ausführungsbeispiel zeigt einen Winkel von etwa 4°.

Da sich im dargestellten Ausführungsbeispiel die Befestigungsabschnitte 31 als Schraubgewindeabschnitte zeigen, müssen die Dichtungsabschnitte 32 kegelstumpfförmig ausgebildet sein. Auf die weiter oben wiedergegebenen Überlegungen zu Alternativen der Ausgestaltung der Dichtungsabschnitte 32 darf auch hier hingewiesen werden.

Bei der in Fig. 4c gezeigten Konstruktion sind Anschlagabschnitte nicht funktionsnotwendig. Man sieht vielmehr zwischen der Spitze des Ventil-Einsatzes 21 und dem Boden der Ventil-Aufnahme 22 einen deutlichen Spalt.

Fig. 4a zeigt eine weitere konstruktive Besonderheit des dargestellten, bevorzugten Ausführungsbeispiels einer Ventilblockanordnung 4. Hier ist nämlich vorgesehen, dass der Dichtungsabschnitt 32 an der Ventil-Aufnahme 22 an einer hier und vorzugsweise freistehenden Wandung 35 im Ventilblock 20 ausgebildet ist. Um das zu erreichen, befindet sich hier im Ventilblock 20 hinter der Wandung 35 eine Hohlkammer. Im dargestellten und bevorzugten Ausführungsbeispiel hat die Wandung 35 eine gleichmäßige Wanddicke vorzugsweise eine solche von 1 mm bis 4 mm, insbesondere, so dargestellt, von 2 mm. Auf der Rückseite der Wandung 35 befinden sich keine Stege, die Wandung 35 ist rückseitig freistehend. Das gewährt einerseits einen geometrisch gleichförmigen Dichtungsabschnitt 32 und andererseits ergibt es eine optimal gleichförmige Flexibilität, um eine abgestimmte Deformation der Wandung 35 und damit des Dichtungsabschnittes 32 an der Wandung 35 zu erreichen.

An anderer Stelle, insbesondere am Ausstoßventil-Einsatz 21 b, kann die freistehende Wandung 35 auch am Ventilblock 20 außen angeordnet sein.

In entsprechender Weise wie am Ventilblock 20 ist nach bevorzugter Lehre auch am Ventil-Einsatz 21 eine gezielte Gestaltung vorgesehen. Hierzu ist nach bevorzugter Lehre vorgesehen, dass der Dichtungsabschnitt 32 am Ventil-Einsatz 21 an einer hier und vorzugsweise freistehenden Wandung 36 des Ventil-Einsatzes 21 ausgebildet ist. Das dargestellte und bevorzugte Ausführungsbeispiel zeigt die Wandung 36 des Ventil-Einsatzes 21 abgestuft, nämlich nahe dem Anschlagabschnitt 30 etwas schmaler als nahe dem Befestigungsabschnitt 31. Insgesamt ist aber darauf geachtet worden, dass die Dicke der Wandung 36 des Ventil-Einsatzes 21 nicht größer ist als die Dicke der Wandung 35 des Ventilblockes 20 im Bereich der Dichtungsabschnitte 32.

Wie auch im Stand der Technik bereits praktiziert ist auch erfindungsgemäß besonders bevorzugt vorgesehen, dass sowohl der Ventilblock 20 als auch der Ventil-Einsatz 21 im Kunststoff-Spritzgussverfahren hergestellte Bauteile sind. Typische Beispiele für Kunststoffe, die hier neben Polyolefinen (z. B.: PP, PE) verwendet werden können, sind Fluorpolymere, wie PTFE, PCTFE, PFA, ETFE, FEP oder PVDF.

Wie bereits mehrfach dargestellt worden ist, geht es bei der Lehre der Erfindung um eine gezielt abgestimmte, möglichst geringe Deformation der Bauteile an den Dichtungsabschnitten 32. Das soll auch nach dem Autoklavieren oder nach mehrfachem Autoklavieren immer noch so wirksam sein, dass die Abdichtung des Ventil-Einsatzes 21 in der Ventil-Aufnahme 22 nicht beeinträchtigt ist.

Für die Optimierung des erfindungsgemäß gewünschten Ergebnisses empfiehlt sich eine weitere bevorzugte Ausgestaltung, die dadurch gekennzeichnet ist, dass sowohl der Kunststoff des Ventilblockes 20 als auch der Kunststoff des Ventil-Einsatzes 21 eine Zugfestigkeit von mehr als 12 MPa bei 120°C (EN ISO 12086) aufweist. Die Grenze der Zugfestigkeit bei 120°C soll gewährleisten, dass eine hinreichende restliche Elastizität auch nach mehrfachem Autoklavieren verbleibt. In Verbindung mit der geschickten Anordnung der Dichtungsabschnitte 32 erreicht man damit das erfindungsgemäße Ergebnis in besonders zweckmäßiger Weise.

Weiter kann man noch eine abgestimmte Materialpaarung für die Kunststoffe der aneinander anliegenden Bauteile realisieren. Dazu empfiehlt es sich, dass der Kunststoff des Ventilblocks 20 eine um 40% bis 100% größere Zugfestigkeit (EN ISO 12086, gemessen bei 23°C) als der Kunststoff des Ventil-Einsatzes 21 aufweist. In einem bevorzugten Ausführungsbeispiel, das diese konstruktive Vorgabe erfüllt, besteht der Ventilblock 20 aus einem Fluorpolymer, der ein E-Modul von 500-1100 MPa bei 23°C (EN ISO 12086) aufweist. Dazu passt dann für den Ventil-Einsatz 21 ein Fluorpolymer, das ein E-Modul von etwa 400-700 MPa bei 23°C (EN ISO 12086) hat.

Erfindungsgemäß wird erreicht, dass die Ventilblockanordnung 4 beim Autoklavieren nicht auseinander gebaut werden muss. Man kann sie so wie sie ist autoklavieren, ohne Undichtigkeiten an den Ventil-Einsätzen 21 befürchten zu müssen.

Die in Fig. 4a, b, c dargestellten Ausführungsbeispiele zeigen, dass die Befestigungsabschnitte 31 als ineinander greifende Schraubgewindeabschnitte ausgeführt sind. Das ist die bevorzugte Ausgestaltung, die ein besonders feinfühliges Einsetzen des Ventil-Einsatzes 21 in die Ventil-Aufnahme 22 ermöglicht. Alternativen sind beispielsweise auch eine Bajonettverbindung oder ein Kurzhub-Spannfutter. Beide sind aber nicht so präzise in der Kraftaufbringung auf die Dichtungsabschnitte 32 wie eine Gewindeverbindung.

Am Ventil-Einsatz 21 sollten sich Kraftangriffselemente befinden, an denen man mit einem passenden Werkzeug angreifen kann, um die Schraubbewegung der Befestigungsabschnitte 31 auszuführen. Dazu weiter unten zum Ausführungsbeispiel von Fig. 4c mehr.

Das in Fig. 4a dargestellte Ausführungsbeispiel zeigt noch eine besondere Gestaltung des Ventil-Einsatzes 21, bei dem es sich hier um einen Ansaugventil-Einsatz 21 a handelt. Zur Anbringung der Ansaugleitung 12 ist vorgesehen, dass am hinteren Ende des Ansaugventil-Einsatzes 21 a ein Aufsteckstutzen 40 für einen Schlauch o.dgl. angeordnet ist. Entsprechend einer weiter bevorzugten, besonders zweckmäßigen Konstruktion ist vorgesehen, dass der Aufsteckstutzen 40 nahe dem Ansaugventil-Einsatz 21a von einem über einen umlaufenden Spalt 41 beabstandeten Stützkragen 42 des Ansaugventil-Einsatzes 21 a umgeben ist. Bevorzugt ist der Stützkragen 42 ebenso wie der Aufsteckstutzen 40 am Ventil-Einsatz 21 einstückig ausgeformt.

Fig. 4a kann man entnehmen, dass der umlaufende Spalt 41 sich bis zu seinem Boden verjüngt. Im Gegenzug wird die Wandung des Aufsteckstutzens 40 dicker. Dies ist von Vorteil, da die Ansaugleitung 12 in der Vorratsflasche 2 bis zum Boden ragen soll und nach außen gebogen ist. Zur Aufnahme dieser Biegekräfte nimmt die Dicke der Wandung des Aufsteckstutzens 40 zum Übergang in den Ventil-Einsatz 21 hin zu.

Fig. 4a kann man weiter entnehmen, dass ein auf den Aufsteckstutzen 40 aufgesteckter Schlauch, der die Ansaugleitung 12 in die Vorratsflasche 2 hinein bildet, mit seinem vordersten Abschnitt in den Spalt 41 hineingedrückt werden kann, wo er dann vom Stützkragen 42 in Verbindung mit dem Aufsteckstutzen 40 sicher abdichtend festgeklemmt ist.

Nach einer weiter bevorzugten Lehre der Erfindung ist am Ventil-Einsatz 21 neben dem Anschlagabschnitt 30, dem davon unterschiedenen Befestigungsabschnitt 31 und dem von beiden unterschiedenen Dichtungsabschnitt 32 noch ein weiterer Abschnitt vorgesehen, der zur Aufbringung eines Drehmomentes mit Hilfe eines Handwerkzeugs genutzt werden kann. Der Ventil-Einsatz 21 hat insoweit also dann insgesamt vier unterschiedene Abschnitte.

Bei dem in Fig. 4c dargestellten modifizierten Ausführungsbeispiel einer Ventilblockanordnung 4 gemäß der Erfindung wird der Stützkragen 42 des Ventil-Einsatzes 21 als weiterer Abschnitt zur Aufbringung eines Drehmomentes mit Hilfe eines Handwerkzeugs genutzt. An seiner an den Befestigungsabschnitt 31 unten anschließenden Außenkontur sind für ein Handwerkzeug geeignete Kraftangriffselemente 43 angeformt, über die ein Drehmoment auf den Ventil-Einsatz 21 und die miteinander in Eingriff stehenden Befestigungsabschnitte 31 übertragen werden kann. In Fig. 4b sind diese Kraftangriffselemente 43 als radial angeformte Verzahnung dargestellt, die sich ohne Weiteres in einem Kunststoff-Spritzgussteil herstellen lässt.

Ein weiterer Abschnitt zur Aufbringung eines Drehmomentes kann am Ventil-Einsatz 21 in jedem der zuvor beschriebenen Ausführungsbeispiele vorhanden sein. Insbesondere kann der Stützkragen 42 des Ventil-Einsatzes 21 als weiterer Abschnitt zur Aufbringung eines Drehmomentes kann in jedem zuvor beschriebenen Ausführungsbeispiel angewendet werden.

Aus der gesamten Darstellung in den voranstehenden Ausführungen ergibt sich, dass die Lehre der Erfindung nicht nur eine Ventilblockanordnung 4 für ein Flaschenaufsatzgerät 1 als Austauschteil betrifft, sondern dass die Lehre der Erfindung sich ganz besonders auch auf ein Flaschenaufsatzgerät 1 bezieht, in dem eine Ventilblockanordnung 4 gemäß der Erfindung eingesetzt ist. Insoweit darf auf die voranstehenden Ausführungen verwiesen werden.

### Bezugszeichenliste:

- 1: Flaschenaufsatzgerät
- 2: Vorratsflasche
- 3: Befestigungsanordnung
- 4: Ventilblockanordnung
- 5: Zylinder-Kolben-Anordnung
- 5': Zylinderhülse
- 6: Außengehäuse
- 7: Ausstoßleitung
- 8: Halter
- 9: Spitze
- 9': Mündungsöffnung
- 10: Haltelasche
- 11: Verschlusskappe
- 12: Ansaugleitung
- 13: Rücklaufleitung
- 14: Umschaltventil
- 15: Knebel
- 20: Ventilblock
- 21: Ventil-Einsatz
- 21a: Ansaugventil-Einsatz
- 21b: Ausstoßventil-Einsatz
- 21': Ventilsitz
- 21": Ventilkörper
- 21''': Ventilkäfig
- 22: Ventil-Aufnahme
- 23: Ansaugkanal im Ventilblock
- 24: Ausstoßkanal im Ventilblock
- 30: Anschlagabschnitt an 21 bzw. 22
- 31: Befestigungsabschnitt an 21 bzw. 22
- 32: Dichtungsabschnitt an 21 bzw. 22
- 35: Wandung in 20
- 36: Wandung in 21
- 40: Aufsteckstutzen
- 41: Spalt
- 42: Stützkragen
- 43: Kraftangriffselement

## Patentansprüche

1. Ventilblockanordnung
für ein Flaschenaufsatzgerät (1) zur Handhabung von Flüssigkeiten,
wobei das Flaschenaufsatzgerät (1) eine Zylinder-Kolben-Anordnung (5) zum Ansaugen und Ausstoßen einer Flüssigkeit, eine Ventilblockanordnung (4), ggf. ein die Ventilblockanordnung (4) aufnehmendes Außengehäuse (6), und eine Befestigungsanordnung (3) zum Befestigen des Außengehäuses (6) und/oder der Ventilblockanordnung (4) auf einer Vorratsflasche (2) o.dgl. aufweist,
mit einem Ventilblock (20), einem Ansaugventil-Einsatz (21 a) und/oder einem Ausstoßventil-Einsatz (21 b),
wobei der Ventilblock (20) eine dem jeweiligen Ventil-Einsatz (21) zugeordnete Ventil-Aufnahme (22) aufweist,
wobei der Ventil-Einsatz (21) in der Ventil-Aufnahme (22) auswechselbar und abdichtend eingesetzt ist und
wobei sowohl der Ventilblock (20) als auch der Ventil-Einsatz (21) bzw. die Ventil-Einsätze (21) aus zum Autoklavieren geeigneten Kunststoffen bestehen,
**dadurch gekennzeichnet,**
**dass** der Ventil-Einsatz (21) einen Anschlagabschnitt (30), einen davon unterschiedenen Befestigungsabschnitt (31) und einen von beiden unterschiedenen Dichtungsabschnitt (32) aufweist,
**dass** die zugehörige Ventil-Aufnahme (22) zu den Abschnitten des Ventil-Einsatzes (21) passende Anschlag-, Befestigungs- und Dichtungsabschnitte (30, 31, 32) aufweist und
**dass** bei funktionsgerecht eingebautem Ventil-Einsatz (21) die Befestigungsabschnitte (31) dergestalt kraftübertragend miteinander in Eingriff stehen, dass sowohl die Anschlagabschnitte (30) als auch die Dichtungsabschnitte (32) flächig aneinander anliegen.

2. Ventilblockanordnung nach Anspruch 1, **dadurch gekennzeichnet,**
**dass** der Anschlagabschnitt (30) am Ventil-Einsatz (21) am vorderen, in der Ventil-Aufnahme (22) befindlichen Ende des Ventil-Einsatzes (21) angeordnet ist,
**dass** in Richtung des gegenüberliegenden, hinteren Endes des Ventil-Einsatzes (21) anschließend an den Anschlagabschnitt (30) der Dichtungsabschnitt (32) angeordnet ist und
**dass** in Richtung des hinteren Endes des Ventil-Einsatzes (21) anschließend an den Dichtungsabschnitt (32) der Befestigungsabschnitt (31) angeordnet ist.

3. Ventilblockanordnung nach Anspruch 1 oder 2, **dadurch gekennzeichnet, dass** der Ventil-Einsatz (21) und die zugehörige Ventil-Aufnahme (22) eine Längsachse definieren und dass die Dichtungsabschnitte (32) in einem spitzen Winkel zur Längsachse, vorzugsweise einem Winkel zwischen 1° und 20° zur Längsachse, ausgerichtet sind.

4. Ventilblockanordnung nach Anspruch 3, **dadurch gekennzeichnet,**
**dass** die Dichtungsabschnitte (32) kegelstumpfförmig ausgebildet sind.

5. Ventilblockanordnung nach Anspruch 3 oder 4, **dadurch gekennzeichnet, dass** der Winkel des Dichtungsabschnittes (32) an der Ventil-Aufnahme (22) zur Längsachse um bis zu 2,5° größer ist als der Winkel des Dichtungsabschnittes (32) am Ventil-Einsatz (21) zur Längsachse.

6. Ventilblockanordnung
für ein Flaschenaufsatzgerät (1) zur Handhabung von Flüssigkeiten,
wobei das Flaschenaufsatzgerät (1) eine Zylinder-Kolben-Anordnung (5) zum Ansaugen und Ausstoßen einer Flüssigkeit, eine Ventilblockanordnung (4), ggf. ein die Ventilblockanordnung (4) aufnehmendes Außengehäuse (6), und eine Befestigungsanordnung (3) zum Befestigen des Außengehäuses (6) und/oder der Ventilblockanordnung (4) auf einer Vorratsflasche (2) o.dgl. aufweist,
mit einem Ventilblock (20), einem Ansaugventil-Einsatz (21 a) und/oder einem Ausstoßventil-Einsatz (21 b),
wobei der Ventilblock (20) eine dem jeweiligen Ventil-Einsatz (21) zugeordnete Ventil-Aufnahme (22) aufweist,
wobei der Ventil-Einsatz (21) in der Ventil-Aufnahme (22) auswechselbar und abdichtend eingesetzt ist und
wobei sowohl der Ventilblock (20) als auch der Ventil-Einsatz (21) bzw. die Ventil-Einsätze (21) aus zum Autoklavieren geeigneten Kunststoffen bestehen,
**dadurch gekennzeichnet,**
**dass** der Ventil-Einsatz (21) einen Befestigungsabschnitt (31) und einen davon unterschiedenen Dichtungsabschnitt (32) aufweist,
**dass** die zugehörige Ventil-Aufnahme (22) zu den Abschnitten des Ventil-Einsatzes (21) passende Befestigungs- und Dichtungsabschnitte (31, 32) aufweist,
**dass** bei funktionsgerecht eingebautem Ventil-Einsatz (21) die Befestigungsabschnitte (31) dergestalt kraftübertragend miteinander in Eingriff stehen, dass die Dichtungsabschnitte (32) flächig aneinander anliegen,
**dass** der Ventil-Einsatz (21) und die zugehörige Ventil-Aufnahme (22) eine Längsachse definieren und dass die Dichtungsabschnitte (32) in einem spitzen Winkel zur Längsachse, vorzugsweise einem Winkel zwischen 1° und 20° zur Längsachse, ausgerichtet sind.

7. Ventilblockanordnung nach Anspruch 6, **dadurch gekennzeichnet,**
**dass** die Dichtungsabschnitte (32) kegelstumpfförmig ausgebildet sind.

8. Ventilblockanordnung nach Anspruch 6 oder 7, **dadurch gekennzeichnet, dass** der Winkel des Dichtungsabschnittes (32) an der Ventil-Aufnahme (22) zur Längsachse um bis zu 2,5° größer ist als der Winkel des Dichtungsabschnittes (32) am Ventil-Einsatz (21) zur Längsachse.

9. Ventilblockanordnung nach einem der Ansprüche 1 bis 8, **dadurch gekennzeichnet,**
**dass** der Dichtungsabschnitt (32) an der Ventil-Aufnahme (22) an einer vorzugsweise frei stehenden Wandung (35) im Ventilblock (20) ausgebildet ist und dass, vorzugsweise, die Wandung (35) eine gleichmäßige Wanddicke, vorzugsweise eine Wanddicke von 1 mm bis 4 mm, insbesondere von ca. 2 mm, aufweist.

10. Ventilblockanordnung nach Anspruch 9, **dadurch gekennzeichnet,**
**dass** der Dichtungsabschnitt (32) am Ventil-Einsatz (21) an einer vorzugsweise frei stehenden Wandung (36) des Ventil-Einsatzes (21) ausgebildet ist und dass, vorzugsweise, die Dicke der Wandung (36) des Ventil-Einsatzes (21) nicht größer ist als die Dicke der Wandung (35) des Ventilblockes (20).

11. Ventilblockanordnung nach einem der Ansprüche 1 bis 10, **dadurch gekennzeichnet,**
**dass** sowohl der Ventilblock (20) als auch der Ventil-Einsatz (21) im Kunststoff-Spritzgussverfahren hergestellte Bauteile sind.

12. Ventilblockanordnung nach einem der Ansprüche 1 bis 11, **dadurch gekennzeichnet,**
**dass** sowohl der Kunststoff des Ventilblockes (20) als auch der Kunststoff des Ventil-Einsatzes (21) eine Zugfestigkeit von mehr als 12 MPa bei 120°C (EN ISO 12086) aufweist,
wobei, vorzugsweise, der Kunststoff des Ventilblocks (20) eine um 40% bis 100% größere Zugfestigkeit (EN ISO 12086, gemessen bei 23°C) als der Kunststoff des Ventil-Einsatzes (21) aufweist.

13. Ventilblockanordnung nach einem der Ansprüche 1 bis 12, **dadurch gekennzeichnet,**
**dass** die Befestigungsabschnitte (31) als ineinander greifende Schraubgewindeabschnitte ausgeführt sind.

14. Ventilblockanordnung nach einem der Ansprüche 1 bis 13, **dadurch gekennzeichnet,**
**dass** am hinteren Ende des Ansaugventil-Einsatzes (21 a) ein Aufsteckstutzen (40) für eine Ansaugleitung (12), insbesondere einen Schlauch, angeordnet ist, wobei, vorzugsweise, der Aufsteckstutzen (40) nahe dem Ansaugventil-Einsatz (21 a) von einem über einen umlaufenden Spalt (41) beabstandeten Stützkragen (42) des Ansaugventil-Einsatzes (21 a) umgeben ist,
wobei, weiter vorzugsweise, der Aufsteckstutzen (40) und ggf. auch der Stützkragen (42) am Ansaugventil-Einsatz (21 a) einstückig ausgeformt ist bzw. sind.

15. Flaschenaufsatzgerät zur Handhabung von Flüssigkeiten mit einer Zylinder-Kolben-Anordnung (5) zum Ansaugen und Ausstoßen einer Flüssigkeit, einer Ventilblockanordnung (4), ggf. einem die Ventilblockanordnung (4) aufnehmenden Außengehäuse (6) und einer Befestigungsanordnung (3) zum Befestigen des Außengehäuses (6) und/oder der Ventilblockanordnung (4) auf einer Vorratsflasche (2) o.dgl.,
**dadurch gekennzeichnet,**
**dass** die Ventilblockanordnung (4) gemäß einem oder mehreren der Ansprüche 1 bis 14 ausgeführt ist.

## Claims

1. Valve block assembly
for a bottle attachment apparatus (1) for handling liquids,
wherein the bottle attachment apparatus (1) has a cylinder-and-piston assembly (5) for suctioning and exhausting liquid, a valve block assembly (4), optionally an external housing (6) receiving the valve block assembly (4), and a fastening assembly (3) for fastening the external housing (6) and/or the valve block assembly (4) on a storage bottle (2) or the like, having a valve block (20), an intake valve insert (21a), and/or an exhaust valve insert (21b),
wherein the valve block (20) has a valve receptacle (22) which is assigned to the respective valve insert (21),
wherein the valve insert (21) is inserted in a replaceable and sealing manner in the valve receptacle (22), and
wherein the valve block (20) as well as the valve insert (21) or the valve inserts (21), respectively, are composed of plastics which are suitable for autoclaving,
**characterize in**
that the valve insert (21) has a stop portion (30), a fastening portion (31) which is distinct therefrom, and a sealing portion (32) which is distinct from both, that the associated valve receptacle (22) has stop, fastening, and sealing portions (30, 31, 32) matching the portions of the valve insert (21), and
that the fastening portions (31) in the case of a valve insert (21) which is installed in a functionally correct manner are in force-transmitting mutual engagement in such a manner that both the stop portions (30) as well as the sealing portions (32) bear on one another in a planar manner.

2. Valve block assembly according to Claim 1, **characterized in**
**that** the stop portion (30) on the valve insert (21) is disposed on the front end of the valve insert (21), which end is located in the valve receptacle (22),
**that** the sealing portion (32) is disposed in the direction of the opposite, rear end of the valve insert (21), adjoining the stop portion (30),
**that** the fastening portion (31) is disposed in the direction of the rear end of the valve insert (21), adjoining the sealing portion (32).

3. Valve block assembly according to Claim 1 or 2, **characterized in**
**that** the valve insert (21) and the associated valve receptacle (22) define a longitudinal axis, and that the sealing portions (32) are aligned at an acute angle in relation to the longitudinal axis, preferably at an angle between 1° and 20° in relation to the longitudinal axis.

4. Valve block assembly according to Claim 3, **characterized in**
**that** the sealing portions (32) are configured in a truncated-cone-shape.

5. Valve block assembly according to Claim 3 or 4, **characterized in**
**that** the angle of the sealing portion (32) on the valve receptacle (22) in relation to the longitudinal axis is up to 2.5° larger than the angle of the sealing portion (32) on the valve insert (21) in relation to the longitudinal axis.

6. Valve block assembly
for a bottle attachment apparatus (1) for handling liquids,
wherein the bottle attachment apparatus (1) has a cylinder-and-piston assembly (5) for suctioning and exhausting liquid, a valve block assembly (4), optionally an external housing (6) receiving the valve block assembly (4), and a fastening assembly (3) for fastening the external housing (6) and/or the valve block assembly (4) on a storage bottle (2) or the like, having a valve block (20), an intake valve insert (21a), and/or an exhaust valve insert (21b),
wherein the valve block (20) has a valve receptacle (22) which is assigned to the respective valve insert (21),
wherein the valve insert (21) is inserted in a replaceable and sealing manner in the valve receptacle (22), and
wherein the valve block (20) as well as the valve insert (21) or the valve inserts (21), respectively, are composed of plastics which are suitable for autoclaving,
**characterized in**
**that** the valve insert (21) has a fastening portion (31) and a sealing portion (32) which is distinct therefrom, that the associated valve receptacle (22) has fastening and sealing portions (31, 32) matching the portions of the valve insert (21), and
**that** the fastening portions (31) in the case of a valve insert (21) which is installed in a functionally correct manner are in force-transmitting mutual engagement in such a manner that the sealing portions (32) bear on one another in a planar manner.
**that** the valve insert (21) and the associated valve receptacle (22) define a longitudinal axis, and that the sealing portions (32) are aligned at an acute angle in relation to the longitudinal axis, preferably at an angle between 1° and 20° in relation to the longitudinal axis.

7. Valve block assembly according to Claim 6, **characterized in**
**that** the sealing portions (32) are configured in a truncated-cone-shape.

8. Valve block assembly according to Claim 6 or 7, **characterized in**
**that** the angle of the sealing portion (32) on the valve receptacle (22) in relation to the longitudinal axis is up to 2.5° larger than the angle of the sealing portion (32) on the valve insert (21) in relation to the longitudinal axis.

9. Valve block assembly according to any one of Claims 1 to 8, **characterized in**
**that** the sealing portion (32) on the valve receptacle is configured on a preferably free-standing wall (35) in the valve block (20), and that the wall (35) preferably has a uniform wall thickness, preferably a wall thickness of 1 mm to 4 mm, in particular of approx. 2 mm.

10. Valve block assembly according to Claim 9, **characterized in**
**that** the sealing portion (32) on the valve receptacle is configured on a preferably free-standing wall (36) of the valve insert (21), and that preferably the thickness of the wall (36) of the valve insert (21) is not greater than the thickness of the wall (35) of the valve block (20).

11. Valve block assembly according to any one of Claims 1 to 10, **characterized in**
**that** both the valve block (20) as well as the valve insert (21) are components which have been manufactured in the plastics injection molding method.

12. Valve block assembly according to any one of Claims 1 to 11, **characterized in**
**that** both the plastics of the valve block (20) as well as the plastics of the valve insert (21) have a tensile strength in excess of 12 MPa at 120°C (EN ISO 12086), wherein the plastics of the valve block (20) have a tensile strength (EN ISO 12086 measured at 23°C) which is higher by 40% to 100% than the plastics of the valve insert (21).

13. Valve block assembly according to any one of Claims 1 to 12, **characterized in**
**that** the fastening portions (31) are embodied as mutually engaging screw thread portions.

14. Valve block assembly according to any one of Claims 1 to 13, **characterized in**
**that** a push-fit connector (40) for an intake line (12), in particular for a tube, is disposed at the rear end of the intake valve insert (21a),
wherein, preferably, the push-fit connector (40) close to the intake valve insert (21a) is surrounded by a support collar (42) of the intake valve insert (21a), which is spaced apart by an encircling gap (41), wherein, furthermore preferably, the push-fit connector (40) and optionally also the support collar (42) is/are integrally molded on the intake valve insert (21a).

15. Bottle attachment apparatus for handling liquids having a cylinder-and-piston assembly (5) for sectioning and exhausting liquid, a valve block assembly (4), optionally an external housing (6) receiving the valve block assembly (4), and a fastening assembly (3) for fastening the external housing (6) and/or the valve block assembly (4) on a storage bottle (2) or the like,
**characterized in**
**that** the valve block assembly (4) is embodied according to any one or a plurality of Claims 1 to 14.

## Revendications

1. Agencement de bloc-soupape pour un appareil de chapeau de bouteille (1) pour la manipulation de liquides, l'appareil de chapeau de bouteille (1) présentant un agencement cylindre-piston (5) pour aspirer et éjecter un liquide, un agencement de bloc-soupape (4), éventuellement un boîtier extérieur (6) recevant l'agencement de bloc-soupape (4) et un agencement de fixation (3) pour la fixation du boîtier extérieur (6) et/ou de l'agencement de bloc-soupape (4) sur une bouteille de stockage (2) ou similaire, comprenant un bloc-soupape (20), un insert de soupape d'aspiration (21a) et/ou un insert de soupape d'éjection (21b), le bloc-soupape (20) présentant un logement de
soupape (22) associé à l'insert de soupape respectif (21), l'insert de soupape (21) étant inséré dans le logement de soupape (22) de manière remplaçable et étanche et le bloc-soupape (20) ainsi que l'insert de soupape (21) ou les inserts de soupape (21) se composant de matières plastiques appropriées pour le passage à l'autoclave,
**caractérisé en ce que**
l'insert de soupape (21) présente une portion de butée (30), une portion de fixation (31) différente de celle-ci et une portion d'étanchéité (32) différente des deux,
le logement de soupape associé (22) présente des portions de butée, de fixation et d'étanchéité (30, 31, 32) adaptées aux portions de l'insert de soupape (21), et
lorsque l'insert de soupape (21) est installé en vue d'un fonctionnement conforme, les portions de fixation (31) sont en prise les unes avec les autres par transmission de force de telle sorte que les portions de butée (30) ainsi que les portions d'étanchéité (32) s'appliquent à plat les unes contre les autres.

2. Agencement de bloc-soupape selon la revendication 1, **caractérisé en ce que** la portion de butée (30) sur l'insert de soupape (21) est disposée au niveau de l'extrémité avant de l'insert de soupape (21), se trouvant dans le logement de soupape (22), **en ce que** dans la direction de l'extrémité arrière ou opposée de l'insert de soupape (21), à la suite de la portion de butée (30), est disposée la portion d'étanchéité (32) et **en ce que** dans la direction de l'extrémité arrière de l'insert de soupape (21) à la suite de la portion d'étanchéité (32) est disposée la portion de fixation (31).

3. Agencement de bloc-soupape selon la revendication 1 ou 2, **caractérisé en ce que** l'insert de soupape (21) et le logement de soupape associé (22) définissent un axe longitudinal et **en ce que** les portions d'étanchéité (32) sont orientées suivant un angle aigu par rapport à l'axe longitudinal, de préférence suivant un angle compris entre 1° et 20° par rapport à l'axe longitudinal.

4. Agencement de bloc-soupape selon la revendication 3, **caractérisé en ce que** les portions d'étanchéité (32) sont réalisées sous forme tronconique.

5. Agencement de bloc-soupape selon la revendication 3 ou 4, **caractérisé en ce que** l'angle de la portion d'étanchéité (32) au niveau du logement de soupape (22) par rapport à l'axe longitudinal est supérieur d'au plus 2,5° à l'angle de la portion d'étanchéité (32) au niveau de l'insert de soupape (21) par rapport à l'axe longitudinal.

6. Agencement de bloc-soupape pour un appareil de chapeau de bouteille (1) pour la manipulation de liquides, l'appareil de chapeau de bouteille (1) présentant un agencement cylindre-piston (5) pour aspirer et éjecter un fluide, un agencement de bloc-soupape (4), éventuellement un boîtier extérieur (6) recevant l'agencement de bloc-soupape (4) et un agencement de fixation (3) pour la fixation du boîtier extérieur (6) et/ou de l'agencement de bloc-soupape (4) sur une bouteille de stockage (2) ou similaire, comprenant un bloc-soupape (20), un insert de soupape d'aspiration (21a) et/ou un insert de soupape d'éjection (21b), le bloc-soupape (20) présentant un logement de soupape (22) associé à l'insert de soupape respectif (21), l'insert de soupape (21) étant inséré dans le logement de soupape (22) de manière remplaçable et étanche et le bloc-soupape (20) ainsi que l'insert de soupape (21) ou les inserts de soupape (21) se composant de matières plastiques appropriées pour le passage à l'autoclave,
**caractérisé en ce que**
l'insert de soupape (21) présente une portion de fixation (31) et une portion d'étanchéité (32) différente de celle-ci,
**en ce que** le logement de soupape associé (22) présente des portions de fixation et d'étanchéité (31, 32) adaptées aux portions de l'insert de soupape (21),
lorsque l'insert de soupape (21) est installé en vue d'un fonctionnement conforme, les portions de fixation (31) sont en prise les unes avec les autres par transmission de force de telle sorte que les portions d'étanchéité (32) s'appliquent à plat les unes contre les autres,
l'insert de soupape (21) et le logement de soupape associée (22) définissent un axe longitudinal, et **en ce que** les portions d'étanchéité (32) sont orientées suivant un angle aigu par rapport à l'axe longitudinal, de préférence suivant un angle compris entre 1° et 20° par rapport à l'axe longitudinal.

7. Agencement de bloc-soupape selon la revendication 6, **caractérisé en ce que** les portions d'étanchéité (32) sont réalisées sous forme tronconique.

8. Agencement de bloc-soupape selon la revendication 6 ou 7, **caractérisé en ce que** l'angle de la portion d'étanchéité (32) au niveau du logement de soupape (22) par rapport à l'axe longitudinal est supérieur d'au plus 2,5° à l'angle de la portion d'étanchéité (32) au niveau de l'insert de soupape (21) par rapport à l'axe longitudinal.

9. Agencement de bloc-soupape selon l'une quelconque des revendications 1 à 8, **caractérisé en ce que** la portion d'étanchéité (32) au niveau du logement de soupape (22) est réalisée au niveau d'une paroi (35) de préférence autoportante dans le bloc-soupape (20), et **en ce que** de préférence la paroi (35) présente une épaisseur de paroi uniforme, de préférence une épaisseur de paroi de 1 mm à 4 mm, en particulier d'environ 2 mm,

10. Agencement de bloc-soupape selon la revendication 9, **caractérisé en ce que** la portion d'étanchéité (32) au niveau de l'insert de soupape (21) est réalisée au niveau d'une paroi (36) de préférence autoportante de l'insert de soupape (21) et **en ce que** de préférence l'épaisseur de la paroi (36) de l'insert de soupape (21) n'est pas supérieure à l'épaisseur de la paroi (35) du bloc-soupape (20).

11. Agencement de bloc-soupape selon l'une quelconque des revendications 1 à 10, **caractérisé en ce qu'**à la fois le bloc-soupape (20) ainsi que l'insert de soupape (21) sont des composants fabriqués par un procédé de moulage par injection de plastique.

12. Agencement de bloc-soupape selon l'une quelconque des revendications 1 à 11, **caractérisé en ce que** le plastique du bloc-soupape (20) ainsi que le plastique de l'insert de soupape (21) présentent une résistance à la traction supérieure à 12 MPa à 120°C (EN ISO 12086),
le plastique du bloc-soupape (20) présentant de préférence une résistance à la traction supérieure de 40 % à 100 % (EN ISO 12086, mesurée à 23°C) au plastique de l'insert de soupape (21).

13. Agencement de bloc-soupape selon l'une quelconque des revendications 1 à 12, **caractérisé en ce que** les portions de fixation (31) sont réalisés sous la forme de portion à filetage de vis s'engageant les unes dans les autres.

14. Agencement de bloc-soupape selon l'une quelconque des revendications 1 à 13, **caractérisé en ce qu'**à l'extrémité arrière de l'insert de soupape d'aspiration (21a) est disposée une tubulure d'enfichage (40) pour une conduite d'aspiration (12), en particulier un tuyau, la tubulure d'enfichage (40), à proximité de l'insert de soupape d'aspiration (21a), étant de préférence entourée par un rebord de support (42) de l'insert de soupape d'aspiration (21a) espacé par le biais d'une fente périphérique (41),
la tubulure d'enfichage (40) et éventuellement également le rebord de support (42) étant de préférence en outre formés d'une seule pièce sur l'insert de soupape d'aspiration (21a).

15. Appareil de chapeaux de bouteilles pour la manipulation de liquide, comprenant un agencement cylindre-piston (5) pour aspirer et éjecter un liquide, un agencement de bloc-soupape (4), éventuellement un boîtier extérieur (6) recevant l'agencement de bloc-soupape (4) et un agencement de fixation (3) pour la fixation du boîtier extérieur (6) et/ou de l'agencement de bloc-soupape (4) sur une bouteille de stockage (2) ou similaire,
**caractérisé en ce que**
l'agencement de bloc-soupape (4) est réalisé selon l'une quelconque ou plusieurs des revendications 1 à 14.
